# EUROPEAN PATENT APPLICATION

(11) **EP 3 043 157 A2**
(43) Date of publication of application: **13.07.2016**
(21) Application number: 15003543.4
(22) Date of filing: 11.12.2015
(51) Int. Cl.: G01F 23/284, B60R 25/00

(54) **AN APPARATUS FOR SURVEILLANCE OF A FUEL SYSTEM OF A VEHICLE**

(30) Priority: 16.12.2014 SE 1430170
(71) Applicant: Innoware Development AB, 73338 Sala (SE)
(72) Inventor: Söderqvist, Karl-Henrik, 73338 Sala (SE)

(57) **Abstract**

An apparatus (1) for surveillance of a fuel system (3) of a vehicle. The apparatus comprises a measurement unit (10) comprising sensor means (13) sensing changes of at least one parameter that is dependent on the integrity of the fuel system (3), and a surveillance unit (12) comprising a processing unit (20) and signaling means (22). The processing unit (20) is adapted to receive information from the sensor means and, on basis on the received information, detect a significant change in said at least one parameter that is related to a modification of the integrity of the fuel system. The signaling means is adapted to, in response to said detected significant change, generate a notification message that notifies a user that the integrity of the fuel system has been modified.

## Description

### FIELD OF THE INVENTION

The present invention relates to an apparatus for surveillance of a fuel system of a vehicle. The apparatus comprises sensor means adapted to be arranged at an inlet of the fuel system and senses changes of at least one parameter that is dependent on the integrity of the fuel system when the vehicle is in an inactive state. The apparatus further comprises a surveillance unit comprising a processing unit and signaling means. The processing unit is adapted to receive information from the sensor means and, on basis on the received information, detect a significant change in said at least one parameter that is related to a modification of the integrity of the fuel system. The signaling means is adapted to, in response to said detected significant change, generate a notification message that notifies a user that the integrity of the fuel system has been modified.

### PRIOR ART

Increasing fuel prices have led to an increase in theft of fuel from fuel systems of vehicles. The fuel thefts cause problems to the owners and users of the vehicles.

Firstly, there is the cost of replacing the stolen fuel. Moreover, if the vehicle is located far from refilling facilities, replacing the stolen fuel may be problematic and time consuming. Furthermore, the stolen fuel puts the vehicle in inoperative state, which may results in missed deliveries and business disruption.

If the thieves can not get into the tank through the fuel cap, they may cut fuel lines or drill directly into the tanks. For example, there may be damage to fuel filler caps and holes in fuel tanks. Accordingly, the fuel theft may cause permanent damages to the fuel system that needs to be repaired to before the vehicle can be in operation again, which is time consuming and puts the vehicle in an idle state before the fuel system is repaired.

### OBJECTS AND SUMMARY OF THE INVENTION

An object of the present invention is to provide an apparatus for surveillance of a fuel system that notifies a user when the integrity of the fuel system is modified.

This object is obtained by an apparatus for surveillance of a fuel system of a vehicle according to claim 1. The apparatus comprises a measurement unit comprising sensor means adapted to be arranged at an inlet of the fuel system and sense changes of at least one parameter that is dependent on the integrity of the fuel system, and a surveillance unit comprising a processing unit and signaling means, wherein the processing unit is adapted to receive information from the sensor means and, on basis on the received information, detect a significant change in said at least one parameter that is related to a modification of the integrity of the fuel system, wherein the signaling means is adapted to, in response to said detected significant change, generate a notification message that notifies a user that the integrity of the fuel system has been modified.

The sensor means is arranged at the inlet of the of the fuel system. The sensor means is arranged for sensing one or more parameters that that is dependent on the integrity of the fuel system. The information from the sensor means is transferred from the sensor means to the processing unit that processes the information in order to determine if there is a significant change in the at least one parameter. The significant change in the at least one parameter is related to a modification of the integrity of the fuel system of the vehicle.

The significant change may for example be detected based on the criterion that the parameter is exceeding a predetermined threshold value, an absolute value, a change between two consecutive measurement values exceeds a threshold value, and etcetera.

If the processing unit has determined that there is a significant change in the at least one parameter, the signaling means generates the notification message that indicates to the user that the integrity of the fuel system has been modified.

The apparatus provides the advantage that the fuel system can be surveilled in regards to unauthorized modifications of the fuel system of the vehicle, in particular in the event of fuel theft from the fuel system of the vehicle. In the event that a significant change has been detected, the signaling means generate a notification message that notifies a user that the integrity of the fuel system has been modified so that the user can take measures in order to stop the fuel theft.

According to an embodiment of the invention, the fuel system comprises a fuel filler cap and said significant change comprises a change in the position of the fuel filler cap, wherein said sensor means comprises a position sensor arrangement configured to detect said change in the position of the fuel filler cap.

By means of arranging a position sensor arrangement at the fuel filler cap, it is possible to detect when the position of fuel filler cap is changed, such by a displacement or a rotation. The position sensor arrangement comprises one or more sensors that sense at least one of displacement and rotation. Accordingly, it is possible to detect and generate a notification message to the user that the integrity of the fuel system has been modified in the event of displacement or rotation of the fuel filler cap. In the event that a lock to the fuel filler cap is broken or the fuel filler cap is bend open, a notification message with be generated to the user.

According to an embodiment of the invention, the position sensor arrangement comprises a gyro and an accelerometer provided at the fuel filler cap. By means of using a gyro and an accelerometer both displacements and rotation are detected.

According to an embodiment of the invention, the fuel system comprise a fuel tank adapted to contain fuel and said significant change comprises a change in the volume of fuel in the fuel tank, wherein said sensor means comprises a volume sensor arrangement that is configured to detect said change in the volume of the fuel in the fuel tank.

By arranging a volume sensor arrangement at the fuel tank, it is possible to detect if the fuel level in the fuel tank is changed. The volume sensor arrangement comprises one or more sensor that senses a change in the volume of the fuel tank or a part of the fuel tank. Accordingly, it is possible to detect and generate a notification message to the user that the integrity of the fuel system has been modified in the event of a significant change in the fuel volume in the fuel tank.

According to an embodiment of the invention, the volume sensor arrangement comprise a transmitter adapted to transmit an echo signal with a gradually increasing or decreasing frequency within a frequency range and a receiver adapted to receive an echo of the echo signal, wherein the processing unit is adapted to detect a significant change in the volume of the fuel in the fuel tank between two measurement events by detecting a change in a resonance frequency of the fuel tank comprising the fuel, which resonance frequency of each measurement event is determined by detecting the highest amplitude of the received echo signal within said frequency range.

The resonance frequency of the fuel tank with the fuel is dependent on the volume of the fuel within the fuel tank. By determining a change in the resonance frequency of the fuel tank comprising the fuel, it is possible to detect a significant change in the volume of the fuel in the fuel tank.

The resonance frequency of the fuel tank comprising the fuel is determined by controlling the transmitter so that the echo signal is transmitted in with gradually increasing or decreasing frequency within the frequency range, such as a frequency range of between 50-500 Hz. The resonance frequency of a measurement event corresponds to the detected frequency of the highest received amplitude within the frequency range. By detecting a significant change in the determined resonance frequency between two measurement events, it is possible to detect that the volume in the fuel tank is decreasing and generate the notification signal that notifies the user that that a fuel theft is ongoing.

According to an embodiment of the invention, the fuel apparatus comprise a fuel tank that is enclosed from the surrounding and said significant change comprises a change in the luminance in the fuel tank, wherein said sensor means comprises a light sensor arrangement configured to detect said change in the luminance in the fuel tank.

In its normal state light is prevented from entering the fuel tank. By means of arranging a light sensor arrangement in the fuel tank, it is possible to detect if light is coming into the fuel tank from an opening, such as through the fuel filler cap or drilled opening elsewhere at the fuel tank. Accordingly, it is possible to detect and generate a notification message to the user that the integrity of the fuel system has been modified in the event that light is entering the fuel tank.

According to an embodiment of the invention, the light sensor arrangement comprises a phototransistor.

According to an embodiment of the invention, the fuel system comprise a fuel tank comprising at least a portion of air and said significant change comprises a change in the air pressure in the fuel tank, wherein said sensor means comprises an air pressure sensor arrangement configured to detect said significant change in the air pressure in the fuel tank.

By means of arranging an air pressure sensor arrangement in the fuel tank, it is possible to detect impulses to the fuel tank, such as created when the fuel tank receives a hammering strike, such as from a hammer or a hammer drill. The term "air pressure" is to be understood as the pressure of a compartment in the fuel tank with air or air mixed with fuel fumes. Accordingly, it is possible to detect and generate a notification message to the user that the integrity of the fuel system has been modified in the event of a significant change in the air pressure within the tank.

According to an embodiment of the invention, the air pressure sensor arrangement comprises a piezoelectric pressure sensor.

According to an embodiment of the invention, the measurement unit comprises a wireless transmitter adapted to transmit information from the sensor means to a wireless receiver of the surveillance unit.

According to an embodiment of the invention, a wireless transmitter connected to the sensor means and is adapted to transmit information from the sensor means via the wireless receiver to the surveillance unit.

Preferably, the measurement unit is arranged at an opening to the fuel tank and the surveillance unit is located at a different location in the vehicle. Thereby, only small space is required within the fuel tank for the measurement unit. Preferably, the measurement unit is arranged in a fuel filler cap of the fuel system. The information on the changes in said at least one parameter is transferred wirelessly from the sensor means to the processing unit of the surveillance unit by means of the wireless transmitter at the measurement unit and the wireless receiver at the surveillance unit.

According to an embodiment of the invention, the wireless transmitter and wireless receiver are adapted to transmit said information using a communication protocol, such as one of Bluetooth, ZigBee, Wi-Fi communication protocol.

According to an embodiment of the invention, the measurement unit comprises an energy storage, such as a battery, adapted to provide power to the components of the measurement unit. By means of the energy storage and the wireless transmitter, the measurement unit is a separate unit that can be installed at the fuel system of the vehicle. Preferably, the energy storage has an energy storage capacity that allows it to provide power to the components of the measurement unit for a certain period, such as for example up to two years.

According to an embodiment of the invention, the measurement unit comprises a printed circuit board, where the battery and sensor means are arranged on the printed circuit board.

According to an embodiment of the invention, the wireless transmitter of the measurement unit and the wireless receiver of the surveillance unit are adapted to form a communication link for transmitting information from the measurement unit to the surveillance unit, wherein the processing unit is adapted to verify that the communication link is maintained and if the communication link has been interrupted generate an alarm signal indicating that the communication link has been interrupted.

By means of controlling that the communication link between the measurement unit and the surveillance unit is maintained, it is assured that interference to the communication link is not used for obstructing the operation of the surveillance apparatus.

According to an embodiment of the invention, the surveillance unit is adapted to generate an alarm signal if the communication link has been interrupted for longer than a predetermined period of time.

According to an embodiment of the invention, said period of time is between 5 and 10 seconds.

According to an embodiment of the invention, the apparatus comprises a plurality of measurement units, each provided with a unique identity in respect to the plurality of measurement units, wherein the measurement units are arranged at different location at one or more fuel systems, wherein the surveillance unit is adapted to receive information from the measurement units and detect said significant change for at least one of the measurement units, wherein the signaling means is adapted to, in response to said detected significant change, generate the notification message comprising information on the identity of the one or more measurement units relating to a location where the integrity of the fuel system has been modified.

The apparatus may be used for surveillance of one or more fuel systems using a plurality of measurement units. Thereby, it is possible to use a single surveillance unit for generating the notification message. Furthermore, the notification message is arranged so that it comprises information indicating to which of the one or more measurement unit that a modification of the one or more fuel systems are related.

According to an embodiment of the invention, the apparatus comprises a server and the surveillance unit comprises means for transmitting information to the server, wherein the notification message is generated by transmitting information to the server that is configured to notify a user by sending a message to the user.

According to an embodiment of the invention, said server is adapted to notify the user by transmitting a message, such as one of a SMS message, an e-mail and a telephone call.

According to an embodiment of the invention, the surveillance unit is in communication with the server by means of a GSM communication protocol.

According to an embodiment of the invention, the apparatus comprises means for transmitting information to a communication system of one or more of the vehicles, which communication system comprises a user interface adapted to present information relating to that the integrity of the fuel system has been modified. In case the vehicle is provided with a suitable communication system, this can be used for presenting said notification message. The communication system of the vehicle is for example CANbus, etcetera.

According to an embodiment of the invention, the surveillance unit is adapted to be connected to a communication system of the vehicle and receive information on if the vehicle is in an active or an inactive state, wherein the processing unit is configured to control the signaling means so that the notification message only is generated when the vehicle is in the inactive state. The term inactive state relates to a state where the vehicle is in a standstill state for a period of time. The apparatus is arranged only to generate the notification message when the vehicle is inactive state.

### BRIEF DESCRIPTION OF THE DRAWINGS

The invention will now be explained more closely by the description of different embodiments of the invention and with reference to the appended figures.
- Fig. 1: discloses an apparatus for surveillance of a fuel system according to an embodiment of the invention.
- Fig. 2: discloses an example of sensor means of the apparatus in fig. 1.

### DETAILED DESCRIPTION OF PREFERRED EMBODIMENTS OF THE INVENTION

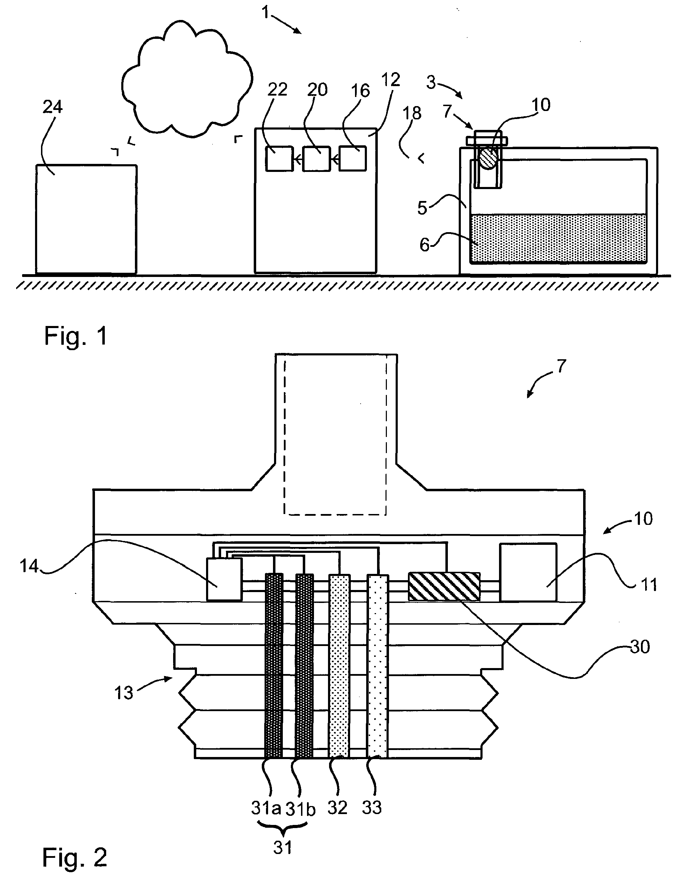

Fig. 1 shows an apparatus 1 for surveillance of a fuel system 3 of a vehicle according to an embodiment of the invention. The fuel system 3 comprises a fuel tank 5 with fuel 6 and a fuel filler cap 7 at an inlet to the fuel tank 5. In fig. 1 only the fuel system 3 of the vehicle is shown.

The apparatus 1 comprises a measurement unit 10 arranged in the fuel filler cap 7 and a surveillance unit 12. The measurement unit 10 is shown in further detail in fig. 2.

The measurement unit 10 is arranged by means of the fuel filler cap 7 at the inlet to the fuel tank 5 and the surveillance unit 12 is arranged at a separate location from the fuel tank 5, such at or in vicinity to a dashboard of the vehicle.

The measurement unit 10 comprises sensor means 13 adapted to sense changes in one or more parameters of the fuel system 3. The parameters are dependent on the integrity of the fuel system 3.

The measurement unit 10 further comprises an energy storage 11, such as a battery, for powering the components of the measurement unit 10. Preferably, the energy storage 11 is configured with an energy storage capacity that enables the components of the measurement unit 10 to be powered during a period between up to two years.

The measurement unit 10 further comprises a wireless transmitter 14 and the surveillance unit 12 comprises a wireless receiver 16. The wireless transmitter 14 of the measurement unit 10 and the wireless receiver 16 of the surveillance unit 12 are adapted to form a communication link 18 for transmitting information on the one or more parameters of the fuel system 3 from the measurement unit 10 to the surveillance unit 12. The communication link 18 is for example based on a one of Bluetooth, ZigBee, Wi-Fi communication protocol. Accordingly, the measurement unit 10 and the surveillance unit 12 are separate units that are adapted to be arranged at different location of the vehicle.

The surveillance unit 12 further comprises a processing unit 20 and signaling means 22. The processing unit 20 is adapted to receive the information on the one or more parameters of the fuel system 3 from the wireless receiver 16 and process the information in order to detect a significant change in at least one or the parameters of the fuel system 3. The significant change is related to a modification of the integrity of the fuel system 3. The detection of the significant change is accordingly related to a possible fuel theft from the fuel system 3.

The sensor means 13 is configured to continuously generate information that is transmitted from the measurement unit 10 to the surveillance unit 12 by means of the communication link 18 between the receiver 14 and the receiver 16. The significant change may be determined by comparing two or more consecutive measurements by the sensor means 13 of the measurement unit 10, such as by determining if the difference between two measurements exceeds a threshold value. The significant change may alternative be detected when the measurement value of one of the parameters exceeds a predetermined level.

The processing unit 20 is adapted to, in response to detecting a significant change, induce the signaling means 22 to generate a notification message that notifies a user that the integrity of the fuel system 3 has been modified, i.e. alarm the user that a fuel theft is ongoing.

According to an embodiment, the processing unit 20 is adapted to receive information on if the vehicle is in an active state or an inactive state, and the processing unit 20 is configured, when detecting the significant change, to induce the signaling means 22 to generate the notification message only if the vehicle is in the inactive state. The active state relates to a state in which the vehicle is in operation and the inactive state relates to a state in which the vehicle is in standstill for a certain period of time.

In the disclosed embodiment of the invention, the signaling means 22 is connected to a server 24. The signaling means 22 is adapted to transmit the notification message to the server 24 that upon receipt of the notification message generates a message that is transmitted to a user device of the user, such as by generating and sending an email, an SMS, a telephone call, and etcetera.

According to an alternative embodiment of the invention, the signaling means 22 comprises a transmitter and the signaling means 22 is adapted to generating the notification message by transmitting information that the integrity of fuel system 3 has been modified directly to an external device, such as a communication system of the vehicle. The external device is configured, upon receipt of the notification message, to notify the user that the integrity of the fuel system 3 has been modified, for example by displaying a message on a user interface of the communication system.

Alternatively or additionally, the signaling means 22 may generate the notification message in the form of a visual and/or audible alarm signal, wherein the signaling means 22 for example comprises visual signal means, such as a lamp, a light-emitting diode (LED), etcetera, and/or audible signaling means, such as a loudspeaker, a buzzer, and etcetera.

According to a preferable embodiment, the processing unit 20 is adapted to verify that the communication link 18 is maintained between the transmitter 14 of the measurement unit 10 and the receiver 16 of the surveillance unit 12. If the communication link 18 has been interrupted, the processing unit 20 is adapted to induce the signaling means 22 to generate an alarm signal indicating that the communication link 18 has been interrupted.

The measurement unit 10 in fig. 2 will now be explained in further details. In the disclosed embodiment, the sensor means 13 comprises four different sensor arrangements 30-33 arranged to detect four different parameters that are dependent on the integrity of the fuel system 3. It shall be understood that it is sufficient to detect only one parameter that is dependent on the integrity of the fuel system 3 using a single sensor arrangement 30-33. However, by detecting a plurality of parameters of the fuel system 3 that are dependent on the integrity of the fuel system 3, the surveillance of the fuel system 3 becomes more rigid compared when using only one sensor arrangement 30-34.

Furthermore, in the present embodiment shown in fig. 2, the sensor means 13 comprising the four sensor arrangements 30-33 are arranged in the fuel filler cap 7. However, it shall be understood that at one or more of the sensor arrangements 30-33 may be arranged at a separate location at the fuel tank 5, such at the inlet without being attached to the fuel filler cap 7.

The sensor means 13 comprises a position sensor arrangement 30 configured to detect a change in the position of the fuel filler cap 7. The processing unit 20 is adapted to receive the information on a change in the position of the fuel filler cap 7, and detect a significant change in the position. Preferably, the position sensor arrangement 30 comprises a gyro and an accelerometer. Thereby, the position sensor arrangement 30 has the ability to detect both displacement and rotation of the fuel filler cap 7.

Accordingly, in the event that the position of the fuel filler cap 7 is changed, the significant change will be detected by the processing unit 20 and the signaling means 22 will be induced to generate the notification message.

The sensor means 13 further comprises a volume sensor arrangement 31 that is configured to detect a change in the volume of fuel 6 in the fuel tank 5. The processing unit 20 is adapted to receive the information on a change in the volume of the fuel 6 in the fuel tank 5, and detect a significant change in the volume of the fuel 6 in the fuel tank 5.

Preferably, the volume sensor arrangement 31 comprises a transmitter 31 a, such as a loudspeaker, and a receiver 31 b, such as a microphone. The transmitter 31a is adapted to generate and transmit an echo signal in the direction of the fuel 6 in the fuel tank 5. The echo signal is in the form of sound generated with an increasing or decreasing frequency within a frequency range, such as a frequency range between 50-500 Hz. The receiver 31 b is adapted to receive an echo of the echo signal. The processing unit 20 is adapted to determine a significant change in the volume of the fuel 6 in the fuel tank 5 between two measurement events by detecting a change in a resonance frequency of the fuel tank 5 comprising the fuel 6. The resonance frequency of each measurement event is determined by detecting the highest amplitude of the received echo signal within the frequency range.

Accordingly, in the event that the volume of the fuel 6 in the fuel tank 5 is changed significantly, such as a change exceeding certain value, the significant change will be detected by the processing unit 20 and the signaling means 22 will be induced to generate the notification message.

The sensor means 13 further comprises a light sensor arrangement 32 configured to detect a change in the luminance in the fuel tank 5. The processing unit 20 is adapted to receive the information on a change in the luminance in the fuel tank 5, and detect a significant change in the luminance in the fuel tank 5. Preferably, the light sensor arrangement 32 comprises is a phototransistor.

Accordingly, in the event that the luminance in the fuel tank 5 is changed significantly, such as a luminance exceeding certain value, the significant change will be detected by the processing unit 20 and the signaling means 22 will be induced to generate the notification message.

The sensor means 13 further comprises an air pressure sensor arrangement 33 configured to detect a significant change in the air pressure in the fuel tank 5. The processing unit 20 is adapted to receive information on a change in the air pressure in the fuel tank 5, and detect a significant change in the air pressure in the fuel tank 5. Preferably, the air pressure sensor arrangement 33 comprises a piezoelectric pressure sensor.

Accordingly, in the event that the air pressure in the fuel tank 5 is changed significantly, such as a change related to an impact to the fuel tank 5, the significant change will be detected by the processing unit 20 and the signaling means 22 will be induced to generate the notification message.

According to an embodiment, the apparatus comprises a plurality of measurement units 10 arranged at different locations on the fuel system 3. For example, the fuel system 3 comprises a plurality of fuel tanks 5, where each fuel tank 5 is provided with a measurement unit 10, such as for surveilling the fuel tanks 5 of a plurality of vehicles. The apparatus 1 is arranged so that each measurement unit 10 are designated a unique identity and the location of the measurement units 10 are known to the processing unit. The processing unit 20 of the surveillance unit 12 is adapted to receive information from the plurality of measurement units and detect said significant change for at least one of the measurement units 10. If a significant change has been detected, the processing unit 20 is adapted to induce the signaling means 22 to generate a notification message comprising information on the identity of the one or more measurement units 10 relating to a location where the integrity of the fuel system 3 has been modified. Accordingly, a single surveillance unit 12 may be used for surveilling a plurality of location of the fuel system 3.

The present invention is not limited to the disclosed embodiments but may be modified within the framework of the claims.

## Claims

1. An apparatus (1) for surveillance of a fuel system (3) of a vehicle, the apparatus (1) comprises
- a measurement unit (10) comprising sensor means (13) adapted to be arranged at an inlet of the fuel system (3) and sense changes of at least one parameter that is dependent on the integrity of the fuel system (3), and
- a surveillance unit (12) comprising a processing unit (20) and signaling means (22),
wherein the processing unit (20) is adapted to receive information from the sensor means (13) and, on basis on the received information, detect a significant change in said at least one parameter that is related to a modification of the integrity of the fuel system (3), wherein the signaling means (22) is adapted to, in response to said detected significant change, generate a notification message that notifies a user that the integrity of the fuel system (3) has been modified.

2. The apparatus (1) according to claim 1, wherein the fuel system (3) comprises a fuel filler cap (7) and said significant change comprises a change in the position of the fuel filler cap (7), wherein said sensor means (13) comprises a position sensor arrangement (30) configured to detect said change in the position of the fuel filler cap (7).

3. The apparatus (1) according to claim 2, wherein the position sensor arrangement (30) comprises a gyro and an accelerometer provided at the fuel filler cap (7).

4. The apparatus (1) according to any of the previous claims, wherein the fuel system (3) comprise a fuel tank (5) adapted to contain fuel (6) and said significant change comprises a change in the volume of fuel (6) in the fuel tank (5), wherein said sensor means (13) comprises a volume sensor arrangement (31) that is configured to detect said change in the volume of the fuel (6) in the fuel tank (5).

5. The apparatus (1) according to claim 4, wherein the volume sensor arrangement (31) comprise a transmitter adapted to transmit an echo signal with a gradually increasing or decreasing frequency within a frequency range and a receiver adapted to receive an echo of the echo signal, wherein the processing unit (20) is adapted to detect a significant change in the volume of the fuel (6) in the fuel tank (5) between two measurement events by detecting a change in a resonance frequency of the fuel tank (5) comprising the fuel (6), which resonance frequency of each measurement event is determined by detecting the highest amplitude of the received echo signal within said frequency range.

6. The apparatus (1) according to any of the previous claims, wherein the fuel system (3) comprise a fuel tank (5) that is enclosed from the surrounding and said significant change comprises a change in the luminance in the fuel tank (5), wherein said sensor means (13) comprises a light sensor arrangement (32) configured to detect said change in the luminance in the fuel tank (5).

7. The apparatus (1) according to claim 6, wherein the light sensor arrangement (32) comprises a phototransistor.

8. The apparatus (1) according to any of the previous claims, wherein the fuel system (3) comprise a fuel tank (5) comprising at least a portion of air and said significant change comprises a change in the air pressure in the fuel tank, wherein said sensor means (13) comprises an air pressure sensor arrangement (33) configured to detect said significant change in the air pressure in the fuel tank (5).

9. The apparatus (1) according to claim 8, wherein the air pressure sensor arrangement (33) comprises a piezoelectric pressure sensor.

10. The apparatus (1) according to any of the previous claims, wherein the measurement unit (10) comprises a wireless transmitter (14) adapted to transmit information from the sensor means (13) to a wireless receiver (16) of the surveillance unit (12).

11. The apparatus (1) according to claim 10, wherein the wireless transmitter (14) of the measurement unit (10) and the wireless receiver (16) of the surveillance unit (12) are adapted to form a communication link (18) for transmitting information from the measurement unit (10) to the surveillance unit (12), wherein the processing unit (20) is adapted to verify that the communication link (18) is maintained and if the communication link (18) has been interrupted generate an alarm signal indicating that the communication link (18) has been interrupted.

12. The apparatus (1) according to any of the previous claims, wherein the apparatus (1) comprises a plurality of measurement units (10) each provided with a unique identity in respect to the plurality of measurement units (10), which measurement units (10) are arranged at different location at one or more fuel systems (3), wherein the surveillance unit (12) is adapted to receive information from the plurality of measurement units (10) and detect said significant change for at least one of the measurement units (10), wherein the signaling means (22) is adapted to, in response to said detected significant change, generate the notification message comprising information on the identity of the one or more measurement units (10) relating to a location where the integrity of the fuel system (3) has been modified.

13. The apparatus (1) according to any of the previous claims, wherein the surveillance unit (12) comprises means for transmitting information to a server (24), wherein the notification message is generated by transmitting information to the server (24) that is configured to notify a user by sending a message to the user.

14. The apparatus (1) according to any of the previous claims, wherein the apparatus (1) comprises means for transmitting information to a communication system of one or more of the vehicles, which communication system comprises a user interface adapted to present information relating to that the integrity of the fuel system (3) has been modified.

15. The apparatus (1) according to any of the previous claims, wherein the surveillance unit (12) is adapted to be connected to a communication system of the vehicle and receive information on if the vehicle is in an active or an inactive state, wherein the processing unit (20) is configured to control the signaling means (22) so that the notification message only is generated when the vehicle is in the inactive state.
